# EUROPÄISCHE PATENTSCHRIFT

(11) **EP 3 934 416 B1**
(45) Veröffentlichungstag und Bekanntmachung des Hinweises auf die Patenterteilung: **16.08.2023**
(21) Anmeldenummer: 20710411.8
(22) Anmeldetag: 03.03.2020
(51) Int. Cl.: A01K 5/00, A01K 5/02

(54) **FUTTERSPENDER**
FEED DISPENSER
DISTRIBUTEUR D'ALIMENTS POUR ANIMAUX

(30) Priorität: 08.03.2019 AT 501842019
(43) Veröffentlichungstag der Anmeldung: 12.01.2022
(73) Patentinhaber: Leibetseder, Ferdinand, 4300 St. Valentin (AT)
(72) Erfinder: Leibetseder, Ferdinand, 4300 St. Valentin (AT)
(74) Vertreter: Speringer, Markus
(86) Internationale Anmeldenummer: PCT/AT2020/060060
(87) Internationale Veröffentlichungsnummer: WO 2020/181309

(56) Entgegenhaltungen:
- EP-A1- 0 395 179
- CN-A- 108 651 308
- US-A- 4 508 061
- Anonymous: "Bosch AXT 2000HP 0600851442 Spares", , 1. Januar 2019 (2019-01-01), XP055694377, Gefunden im Internet: URL:https://www.magic-parts.co.uk/acatalog /Bosch-AXT-2000HP.php [gefunden am 2020-05-12]

## Beschreibung

### Technisches Gebiet

Die Erfindung bezieht sich auf einen Futterspender für Pferde, der ein eine Beschickungsöffnung sowie eine Austragsöffnung aufweisendes Grundgehäuse und ein Betätigungselement für ein Pferd umfasst, wobei im Grundgehäuse eine in einer Antriebsrichtung um ihre Längsachse drehbare Förderschnecke vorgesehen ist, die über einen gegen die Antriebsrichtung freilaufenden Mitnehmer mit dem gegen die Kraft einer Rückstellfeder zwischen einer Ruhelage und einer Betätigungslage verlagerbaren Betätigungselement antriebsverbunden ist, wobei die Förderschnecke ein umlaufendes, mit Schneidflächen zum Zerkleinern von Stückgut ausgebildetes Schneckenblatt aufweist und/oder das Grundgehäuse im Zwickelbereich zwischen Schneckenblatt und Beschickungsöffnung eine Hilfschneide aufweist.

### Stand der Technik

Aus dem Stand der Technik sind Futterspender für Pferde bekannt (AT 519872 A4), die ein in aufgebautem Zustand lotrecht verlaufendes Rohr als Grundgehäuse mit einer oberen Beschickungsöffnung und einer der Beschickungsöffnung in Rohrlängsrichtung gegenüberliegenden Austragsöffnung aufweisen. Das Rohr wird von wenigstens zwei in Rohrlängsrichtung nacheinander angeordneten sowie quer zur Rohrlängsrichtung verlaufenden Seilen bzw. biegeschlaffen elastischen Elementen durchsetzt. Der Durchlassquerschnitt des Rohres wird zufolge der Seile in ihrer Ausgangsstellung verringert, sodass groß genug gewähltes Stückgut, beispielsweise Äpfel, von den Seilen an einem schwerkraftbedingten Durchrutschen bzw. Fallen in Richtung Austragsöffnung gehindert wird. Um das Stückgut freizugeben, indem die Seile von der das Stückgut zurückhaltenden Ausgangsstellung in eine Freigabestellung bewegt werden, sind die Seile jeweils mit normal zu deren Längsrichtung verlaufenden und den Rohrmantel durchsetzenden Zugmitteln verbunden, wobei am außerhalb des Rohrs liegenden Ende des Zugmittels ein kugelförmiges Betätigungselement befestigt ist, welches vom Pferd durch Zubeißen und gleichzeitigem Ziehen betätigbar ist. In einer alternativen Ausführungsvariante kann der Futterspender anstatt der Seile einen flexiblen Schlauch aufweisen, sodass dadurch die Verwendung von rieselfähigem anstatt stückigem Pferdefutter ermöglicht wird. Nachteilig ist allerdings, dass Umbauarbeiten erforderlich sind, um zwischen stückigem und rieselfähigem Pferdefutter wechseln zu können. Zudem ist bei derartigen Futterspendern eine kontrollierte Futterabgabe nicht möglich, da aufgrund der eingesetzten Seile und elastischen Zugmittel die Gefahr besteht, dass bei einer Betätigung des Futterspenders entweder eine zu große Tierfuttermenge auf einmal oder auch gar kein Tierfutter freigegeben wird. Gerade bei großem Stückgut wie Äpfeln ist eine in kurzem Zeitraum erfolgende Aufnahme großer Futtermengen für das Pferd gesundheitsschädlich.

Aus dem Stand der Technik sind auch Vorrichtungen bekannt (US 4508061, EP 0395179 A1), die eine in einer Antriebsrichtung um ihre Längsachse drehbare Förderschnecke umfassen die über einen als Sperrklinke ausgebildeten Mitnehmer mit dem gegen die Kraft einer Rückstellfeder zwischen einer Ruhelage und einer Betätigungslage verlagerbaren Betätigungselement antriebsverbunden ist.

Vorrichtungen zur Abgabe von mineralischem Futter mittels eines Verteilrades sind aus der FR 3050610 A1 bekannt. Darüber hinaus zeigt die US 1569990 Fütterungsbehälter, die eine rotierbare Trommel zur Ausgabe des Futters aufweisen.

Um eine genaue Dosierung von schüttfähigem Futter zu ermöglichen, wird in der DE 19917650 C1 ein Gegengewicht als Betätigungselement für einen beweglich gelagerten Vorratsbehälter oder eine Dosiereinrichtung vorgeschlagen.

In der US 201 10132266 A1 wird ein Futterspender offenbart, der ein vertikal verlaufendes Gehäuse mit einem Futterreservoir aufweist, wobei sich das Futterreservoir zu dessen Austragsöffnung hin unter Ausbildung eines Trichters verjüngt.

Im Futterreservoir ist zudem eine vertikal verlaufende Förderschnecke angeordnet.

Die CN 108651308 A offenbart einen Futterspender mit einer senkrecht angeordneten Förderschnecke, welche über Betätigungselemente von einem Tier verdreht werden kann, um Futter langsam über eine Austragsöffnung abzugeben. Die Förderschnecke ist dabei über eine Ratsche drehbar gelagert, wodurch eine Drehung nur in eine Richtung möglich ist.

### Darstellung der Erfindung

Der Erfindung liegt somit die Aufgabe zugrunde, einen Futterspender der eingangs geschilderten Art so auszugestalten, dass bei kompakter Bauweise ohne Umbauarbeiten eine kontrollierte Futterabgabe von sowohl stückigem als auch rieselfähigem Futter ermöglicht wird.

Die Erfindung löst die gestellte Aufgabe dadurch, dass der Mitnehmer als ein eine in Längsachse der Förderschnecke gerichtete translatorische Bewegung in eine Rotationsbewegung um die Längsachse umsetzender Gewindetrieb ausgebildet ist, an den in Richtung der Längsachse ein gegen eine Rückstellfeder abgestütztes Zugmittel angreift.

Zufolge dieser Merkmale kann Pferdefutter sowohl als Stückgut wie beispielsweise Äpfel, oder als Rieselgut wie zum Beispiel Hafer über die Beschickungsöffnung der Förderschnecke aufgegeben und von dieser zur Austragsöffnung weitergefördert werden, wobei eine robuste und verschleißarme Bauweise des Futterspenders ermöglicht wird. Dadurch, dass der Mitnehmer gegen die Antriebsrichtung freilaufend ist, kann eine Rotationsbewegung der Förderschnecke in entgegengesetzter Richtung zufolge der Rückstellbewegung des Betätigungselementes von der Betätigungslage in die Ruhelage und damit ein Rückfördern bzw. ein Rückstau von bereits in Richtung Austragsöffnung gefördertem Tierfutter vermieden werden. Abhängig von der Dimensionierung der Förderschnecke sowie deren Lagerung im Gehäuse kann eingestellt werden, ob sich die Förderschnecke zufolge der Verlagerung des Betätigungselementes von der Ruhelage in die Betätigungslage lediglich um einen vorgegebenen Rotationsweg dreht, sodass der Futteraustrag diskontinuierlich erfolgt, oder aber, ob die einmal in Rotation versetzte Förderschnecke trägheitsbedingt weiterrotieren kann, um einen kontinuierlichen Futteraustrag zu ermöglichen. Der erfindungsgemäße Futterspender erlaubt es somit, dass das Pferd über einen längeren Zeitraum ohne Nachfüllen des Futterspenders kleinere Futterrationen auch von stückigem Tierfutter wie Äpfeln zu sich nehmen kann, wodurch eine für das Pferd ungesunde, lediglich in einem kurzen Zeitfenster erfolgende Überfütterung vermieden werden kann.

Gerade bei größerem Stückgut wie Karotten oder Äpfeln muss im Hinblick auf für das Pferd verträgliche Stückgutgrößen das Stückgut entsprechend vorverarbeitet werden, bevor der Futterspender damit beschickt wird. Um daher sicherzustellen, dass stückiges Tierfutter unabhängig von dessen Form oder Größe eingesetzt werden kann, ohne dieses zuerst vorverarbeiten zu müssen, empfiehlt es sich, dass die Förderschnecke ein umlaufendes, mit Schneidflächen zum Zerkleinern von Stückgut ausgebildetes Schneckenblatt aufweist. Dadurch können beispielsweise sowohl Äpfel als auch längliches Stückgut wie beispielsweise Karotten in eine für das Pferd verträglichere Stückgröße zerkleinert und von der Förderschnecke problemlos weitergefördert werden. Beispielsweise kann die Förderschnecke das ihr zugeführte Stückgut im sich zwischen Schneckenblatt und Beschickungsöffnung des Grundgehäuses bildenden Zwickelbereich schneiden. Für noch bessere Schnittbedingungen kann das Grundgehäuse in besagtem Zwickelbereich zusätzlich oder alternativ eine Hilfsschneide aufweisen.

Um das den erfindungsgemäßen Futterspender betätigende Pferd hinsichtlich seiner kognitiven sowie feinmotorischen Fähigkeiten zu fordern, können unterschiedliche, parallel vorgesehene oder austauschbare Betätigungsmechanismen vorgesehen sein, die im Folgenden beschrieben werden. Der erfindungsgemäße Mitnehmer kann dabei eine in den Schneckenkern der Förderschnecke einführbare Antriebsstange mit um die Längsachse spiralförmig umlaufenden Führungsflächen sowie mit diesen zusammenwirkende Anschläge eines gegen die Förderschnecke abgestützten Freilauflagers umfassen. Die Antriebsstange kann beispielsweise als verdrehte Vierkant- oder Sternprofilstange oder als eine Führungsflächen bildende, spirälförmig umlaufende Gewindegänge aufweisende Gewindestange ausgebildet sein. Um zudem eine gleichmäßige Translationsbewegung des Zugmittels in Richtung Schneckenlängsachse zu ermöglichen, kann dieses in Führungsaufnahmen eingreifende Führungskörper aufweisen. Damit das Betätigungsmittel vom Pferd aus unterschiedlichen Raumrichtungen mittels Drücken und/ oder Ziehen betätigbar ist, kann das Zugmittel einen gegen die Rückstellfeder abgestützten Zugmittelkopf sowie einen daran anschließenden, zugfesten und biegeschlaffen Zugmittelkörper wie beispielsweise ein Seil aufweisen. Je nachdem wie die Gangsteigung der Förderschnecke oder aber auch das Getriebeübersetzungsverhältnis zwischen Mitnehmer und Förderschnecke bzw. die Verlagerungsweglänge des Betätigungselementes gewählt wird, kann die gewünschte Austragsmenge des Tierfutters voreingestellt werden.

Darüber hinaus ist es ein bevorzugtes Merkmal, dass die Zugstange mit einem um eine quer zur Längsachse der Förderschnecke verlaufende Hebelachse drehbar gelagerten Hebel mit dem Betätigungselement antriebsverbunden ist, sodass eine Betätigung des Futterspenders durch ein Hinführen der Pferdeschnauze in Richtung des Futterspenders ermöglicht wird. Der Hebel kann beispielsweise einen drehbar im Grundgehäuse bzw. in einem an das Grundgehäuse angesetzten Schutzgehäuse für den Hebel gelagerten Drehzapfen aufweisen und Verbindungsgabeln ausbilden, die sich im Eingriff mit quer zur Längsachse der Zugstange verlaufenden und von dieser abstehenden Verbindungszapfen befinden.

In einer nicht beanspruchten Alternative kann der Mitnehmer auch drehfest mit einer quer zur Längsachse der Förderschnecke verlaufenden und um diese Längsachse gegen die Kraft einer Rückstellfeder drehbar gelagerten Querstange verbunden sein, an der das Betätigungselement außerhalb der Längsachse der Förderschnecke angeordnet ist. Dadurch erfolgt der Antrieb der Förderschnecke nicht über eine Umsetzung einer in Längsachse der Förderschnecke gerichteten translatorischen Bewegung in eine Rotationsbewegung um die Längsachse der Förderschnecke, sondern es kann direkt ein Drehmoment über das außerhalb der Längsachse der Förderschnecke an der Querstange angeordnete Betätigungselement in den Mitnehmer und folglich in die Förderschnecke eingeleitet werden, wobei auch mehrere solche an Querstangen angeordnete Betätigungselemente vorgesehen sein können.

Bei den aus dem Stand der Technik bekannten, ein lotrecht verlaufendes Rohr als Grundgehäuse aufweisenden Futterspendern gestaltet sich der Nachfüllvorgang insofern problematisch, als das Einfüllen von Tierfutter über die am obersten Rohrende befindliche Beschickungsöffnung erfolgen muss, was gerade für kleinere Personen aufgrund der Aufbauhöhe gegebenenfalls nur unter Zuhilfenahme von beispielsweise Stehleitern geschehen kann. Will man im Gegensatz dazu eine zu hohe Aufbauhöhe vermeiden, muss das Rohr als Grundgehäuse entsprechend kürzer dimensioniert werden, was allerdings in einem geringeren Füllvolumen und somit kürzeren Nachfüllintervallen resultiert. Darüber hinaus ergibt sich im Zusammenhang mit Futterspendern, die mit einem an einer oben hin offenen Beschickungsöffnung kopfüber angesetzten Vorratsbehälter ausgestattet sind das Problem, dass sich Nachfüllvorgänge nicht zuletzt aufgrund der Verschüttungsgefahr als schwierig erweisen oder überhaupt nur mittels eines zusätzlichen Trichters zu bewerkstelligen sind.

Um vor diesem Hintergrund höhere Füllvolumina sowie einen raschen und einfachen Nachfüllvorgang des Tierfutterspenders zu ermöglichen, wird vorgeschlagen, dass das Grundgehäuse einen gegenüber dem Austragabschnitt um die Längsachse der Förderschnecke zwischen einer Gebrauchsstellung und einer Nachfüllstellung rotierbaren Beschickungsabschnitt aufweist, an dessen Beschickungsöffnung ein Vorratsbehälter für das Tierfutter lösbar angesetzt ist. Der Beschickungsabschnitt kann beispielsweise mittels eines um 180° um die Längsachse der Förderschnecke gegenüber dem Austragsabschnitt des Grundgehäuses dreh- sowie lösbaren Bajonettverschlusses am Austragsabschnitt angesetzt sein. Der Vorratsbehälter kann demnach in Gebrauchsstellung kopfüber stehend mit dem Beschickungsabschnitt beispielsweise mittels Schraubverschluss lösbar verbunden sein. Zum Nachfüllen wird der Beschickungsabschnitt mitsamt Vorratsbehälter zunächst in die Nachfüllstellung gedreht und gegebenenfalls vom restlichen Grundgehäuse gelöst. Der Vorratsbehälter kann aber auch gesondert vom Beschickungsabschnitt gelöst und nachgefüllt werden, wobei das vorgegebene Füllvolumen des Vorratsbehälters im Wesentlichen frei wählbar und nicht mehr durch die Aufbauhöhe des Tierfutterspenders beschränkt ist.

### Kurze Beschreibung der Erfindung

In der Zeichnung ist der Erfindungsgegenstand beispielsweise dargestellt. Es zeigen
Fig. 1 eine Seitenansicht eines erfindungsgemäßen Futterspenders in einem schematischen Schnitt in einer ersten Ausführungsform,
Fig. 2 eine Detailansicht eines erfindungsgemäßen Betätigungselementes und Mitnehmers in einer zweiten Ausführungsform in einem größeren Maßstab und
Fig. 3 eine Detailansicht Betätigungselemente und eines Mitnehmers in einer nicht beanspruchten Ausführungsform in einem der Fig. 2 entsprechenden Maßstab.

### Wege zur Ausführung der Erfindung

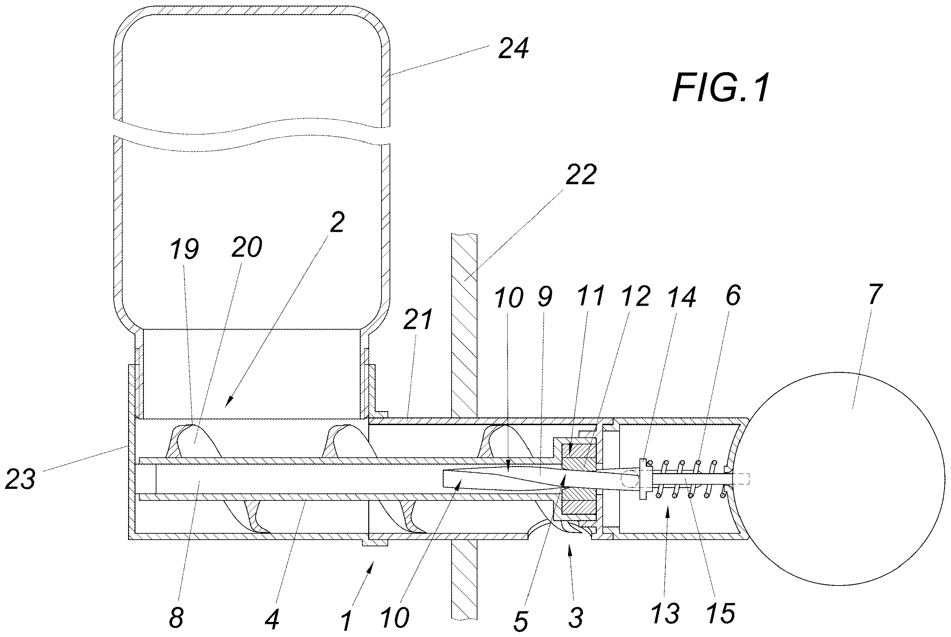

Ein erfindungsgemäßer Futterspender weist ein Grundgehäuse 1 mit einer Beschickungsöffnung 2 und einer Austragsöffnung 3 auf. Im Grundgehäuse 1 ist eine in einer Antriebsrichtung um ihre Längsachse drehbare Förderschnecke 4 vorgesehen, die über einen gegen die Antriebsrichtung freilaufenden Mitnehmer 5 mit einem gegen die Kraft einer Rückstellfeder 6 zwischen einer Ruhelage und einer Betätigungslage verlagerbaren Betätigungselement 7 antriebsverbunden ist. Die in den Fig. 1 bis 3 dargestellten Ausführungsformen zeigen jeweils die Betätigungselemente 7 in ihrer Ruhelage.

Der Mitnehmer 5 kann dabei eine beispielsweise als verdrehte Vierkantprofilstange ausgebildete und in den Schneckenkern 8 einführbare Antriebsstange 9 aufweisen, die um die Längsachse spiralförmig umlaufende Führungsflächen 10 sowie mit diesen zusammenwirkende Anschläge eines gegen die Förderschnecke 4 abgestützten Freilauflagers 1 1 umfasst. Die Anschläge werden beispielsweise durch einen die Antriebsstange 9 aufnehmenden Drehteil 12 des Freilauflagers 1 1 gebildet. Der Mitnehmer 5 bildet einen Gewindetrieb, um eine in Längsachse der Förderschnecke 4 gerichtete translatorische Bewegung in eine Rotationsbewegung um die Längsachse der Förderschnecke 4 umzusetzen, wobei an den Gewindetrieb zur Einleitung der translatorischen Bewegung in Richtung der Längsachse ein Zugmittel 13 angreift, das einen gegen die Rückstellfeder 6 abgestützten Zugmittelkopf 14 sowie einen beispielsweise als Seil ausgebildeten Zugmittelkörper 15 aufweist.

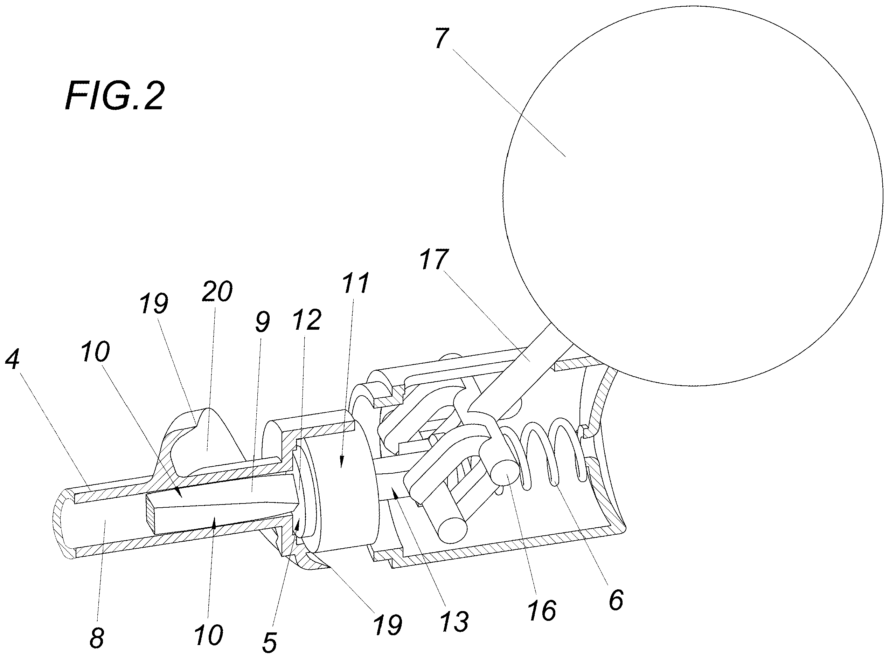

Bei der in Fig. 2 dargestellten Ausführungsform ist das als Zugstange ausgebildete Zugmittel 13 mit einem um eine quer zur Längsachse der Förderschnecke 4 verlaufende, beispielsweise durch einen Drehzapfen 16 gebildete Flebelachse drehbar gelagerten Hebel 17 mit dem Betätigungselement 7 antriebsverbunden.

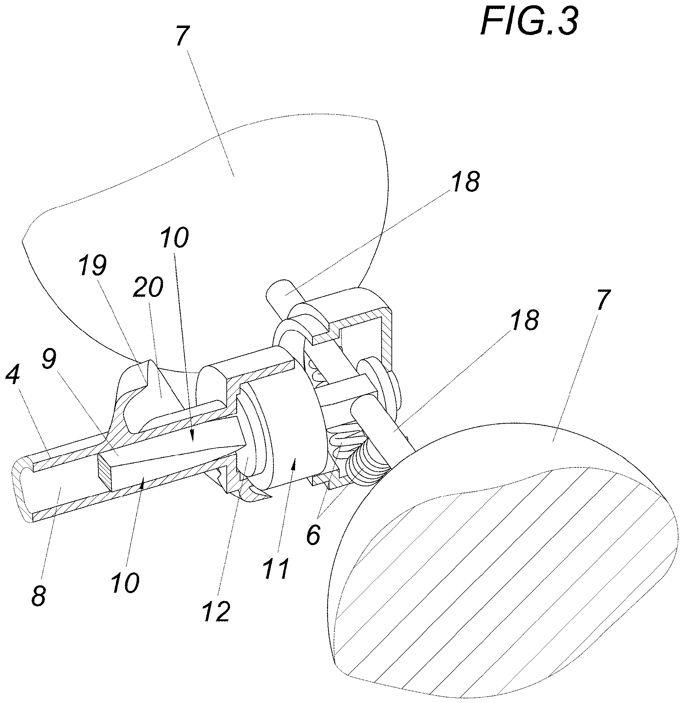

Fig. 3 zeigt eine nicht beanspruchte Ausführungsform, wobei der Mitnehmer 5 drehfest mit quer zur Längsachse der Förderschnecke 4 verlaufenden und um diese Längsachse gegen die Kraft von Rückstellfedern 6 drehbar gelagerten Querstangen 18 verbunden ist, an denen jeweils Betätigungselemente 7 außerhalb der Längsachse der Förderschnecke 4 angeordnet sind.

Um gefördertes Stückgut zu zerkleinern, kann die Förderschnecke 4 ein umlaufendes, Schneidflächen 19 ausbildendes Schneckenblatt 20 aufweisen.

Ein erfindungsgemäßer Futterspender kann beispielsweise über einen Austragsabschnitt 21 des Grundgehäuses 1 an einer Befestigungsstange 22 oder an einem Befestigungsgitter montiert sein. Für einen einfach vorzunehmenden Nachfüllvorgang kann das Grundgehäuse 1 zudem einen Beschickungsabschnitt 23 aufweisen, der gegenüber dem Austragabschnitt 21 um die Längsachse der Förderschnecke 4 zwischen einer in Fig. 1 gezeigten Gebrauchsstellung und einer nicht näher dargestellten Nachfüllstellung rotierbar ist. An der Beschickungsöffnung 2 des Beschickungsabschnittes 23 ist ein Vorratsbehälter 24 für das Tierfutter lösbar angesetzt.

## Patentansprüche

1. Futterspender für Pferde, der ein eine Beschickungsöffnung (2) sowie eine Austragsöffnung (3) aufweisendes Grundgehäuse (1 ) und ein Betätigungselement (7) für ein Pferd umfasst, wobei im Grundgehäuse (1 ) eine in einer Antriebsrichtung um ihre Längsachse drehbare Förderschnecke (4) vorgesehen ist, die über einen gegen die Antriebsrichtung freilaufenden Mitnehmer (5) mit dem gegen die Kraft einer Rückstellfeder (6) zwischen einer Ruhelage und einer Betätigungslage verlagerbaren Betätigungselement antriebsverbunden ist, wobei die Förderschnecke (4) ein umlaufendes, mit Schneidflächen (19) zum Zerkleinern von Stückgut ausgebildetes Schneckenblatt (20) aufweist und/oder das Grundgehäuse (1) im Zwickelbereich zwischen Schneckenblatt und Beschickungsöffnung eine Hilfsschneide aufweist, **dadurch gekennzeichnet, dass** der Mitnehmer (5) als ein eine in Längsachse der Förderschnecke (4) gerichtete translatorische Bewegung in eine Rotationsbewegung um die Längsachse umsetzender Gewindetrieb ausgebildet ist, an den in Richtung der Längsachse ein gegen eine Rückstellfeder (6) abgestütztes Zugmittel (13) angreift.

2. Futterspender nach Anspruch 1, **dadurch gekennzeichnet, dass** das Zugmittel (13) mit einem um eine quer zur Längsachse der Förderschnecke (4) verlaufende Hebelachse drehbar gelagerten Hebel (17) mit dem Betätigungselement (7) antriebsverbunden ist.

3. Futterspender nach Anspruch 1 oder 2, **dadurch gekennzeichnet, dass** das Grundgehäuse (1 ) einen gegenüber dem Austragabschnitt (21 ) um die Längsachse der Förderschnecke (4) zwischen einer Gebrauchsstellung und einer Nachfüllstellung rotierbaren Beschickungsabschnitt (23) aufweist, an dessen Beschickungsöffnung (2) ein Vorratsbehälter (24) für das Tierfutter lösbar angesetzt ist.

## Claims

1. Feed dispenser for horses, comprising a basic housing (1) including a charge opening (2) as well as a discharge opening (3) and an actuating element (7) for a horse, wherein in the basic housing (1) a screw conveyor (4) is provided which is rotatable about its longitudinal axis in a drive direction and which is drivingly connected to the actuating element via a driver (5) running freely against the drive direction which can be displaced between a rest position and an actuating position against the force of a return spring (6), wherein the conveyor screw (4) includes a circumferential screw blade (20) formed with cutting surfaces (19) for comminuting piece goods and/or the basic housing (1) includes an auxiliary cutting edge in the intermeshing area between the screw blade and charge opening, **characterized in that** the driver (5) is formed as a screw drive that transforms a translational movement directed in the longitudinal axis of the conveyor screw (4) into a rotational movement about the longitudinal axis, on which in the direction of the longitudinal axis a traction means (13) supported against a return spring (6) engages.

2. Feed dispenser according to claim 1, **characterized in that** the traction means (13) is drivingly connected to the actuating element (7) with a lever (17) rotatably supported about a lever axis running transversely to the longitudinal axis of the screw conveyor (4).

3. Feed dispenser according to claim 1 or 2, **characterized in that** the basic housing (1) includes a charge section (23) which can be rotated with respect to the discharge section (21) about the longitudinal axis of the conveyor screw (4) between a position of use and a refilling position and at the charge opening (2) of the charge section a storage container (24) for the animal feed is releasably attached.

## Revendications

1. Distributeur de nourriture pour chevaux lequel comprend un boîtier de base (1) pourvu d'une ouverture d'introduction (2) et d'une ouverture d'extraction (3) et un élément d'actionnement (7) destiné à un cheval, le boîtier de base (1) étant équipé d'une vis de transport (4) laquelle peut être mise en rotation autour de son axe longitudinal selon un sens d'entraînement et laquelle se trouve en couplage d'entraînement, à travers un organe d'entraînement (5) pouvant tourner librement à l'encontre du sens d'entraînement, avec ledit élément d'actionnement qui peut être déplacé, à l'encontre de la force d'un ressort de rappel (6), entre une position de repos et une position d'actionnement, la vis de transport (4) étant pourvue d'un filet de vis (20) périphérique réalisé de manière à ce qu'il comporte de tranchants (19) destinés à broyer de la matière se présentant sous forme de morceaux et/ou le boîtier de base (1) étant pourvue, dans la zone d'écoinçon entre le filet de vis et ladite ouverture d'introduction, d'un tranchant auxiliaire, **caractérisé en ce que** l'organe d'entraînement (5) est réalisé sous forme d'un filetage lequel transforme un mouvement de translation selon le sens de l'axe longitudinal de la vis de transport (4) en un mouvement de rotation autour dudit axe longitudinal et dans lequel s'engage, selon le sens dudit axe longitudinal, un moyen de traction (13) prenant appui contre un ressort de rappel (6).

2. Distributeur de nourriture selon la revendication 1, **caractérisé en ce que** le moyen de traction (13) se trouve en couplage d'entraînement, à travers un levier (17) monté rotatif autour d'un axe de levier orienté transversalement à l'axe longitudinale de la vis de transport (4), avec l'élément d'actionnement (7).

3. Distributeur de nourriture selon les revendications 1 ou 2, **caractérisé en ce que** le boîtier de base (1) est pourvu d'une partie d'introduction (23) laquelle peut subir une rotation, autour de l'axe longitudinal de la vis de transport (4) et par rapport à la partie d'extraction (21), entre une position d'utilisation et une position de remplissage et laquelle est dotée, sur son ouverture d'introduction (2), d'un réservoir (24) détachable destiné à la nourriture pour animaux.
